# EUROPEAN PATENT SPECIFICATION

(11) **EP 4 107 379 B1**
(45) Date of publication and mention of the grant of the patent: **19.03.2025**
(21) Application number: 20838203.6
(22) Date of filing: 18.12.2020
(51) Int. Cl.: F02B 39/10, F04D 29/40, F04D 29/58, F02B 39/00, H02K 5/20, H02K 11/33, F02B 33/40

(54) **AN ELECTRIC TURBOMACHINE**
ELEKTRISCHE TURBOMASCHINE
TURBOMACHINE ELECTRIQUE

(30) Priority: 18.02.2020 GB 202002218
(43) Date of publication of application: 28.12.2022
(73) Proprietor: Bowman Power Group Limited, Southampton SO16 0BT (GB)
(72) Inventor: WALLINGTON, Steve, Southampton Hampshire SO14 5QY (GB); FALLON, Rob, Southampton Hampshire SO14 5QY (GB); CREESE-SMITH, Owen, Southampton Hampshire SO14 5QY (GB); FRY, Keith, Southampton Hampshire SO14 5QY (GB); CORDERO-ORILLE, Ivan, Southampton Hampshire SO14 5QY (GB); HARTRIDGE, Mike, Southampton Hampshire SO14 5QY (GB); SZYMKO, Shinri, Southampton Hampshire SO14 5QY (GB); DOWMAN-TUCKER, Paul, Southampton Hampshire SO14 5QY (GB)
(74) Representative: Murgitroyd & Company
(86) International application number: PCT/GB2020/053274
(87) International publication number: WO 2021/165630

(56) References cited:
- EP-A1- 2 305 981
- WO-A1-2014/209873
- KR-A- 20190 106 021

## Description

### Field of the Invention

The present invention relates to an electric turbomachine for use with an internal combustion engine, turbocharger or a fuel cell e-compressor, and more particularly to an electric turbomachine comprising a cooling system that is integrated within the housing of the electric turbomachine.

### Background to the Invention

Regulations and a need to combat climate change continue to push internal combustion engines to have both lower emissions and greater efficiency. However, the need to optimise the operation of engines in vehicles further at key running points still remains a challenge in this field. Many existing applications use a turbocharger, where the energy contained within exhaust gases is extracted via a turbine connected to a compressor housing to improve the power density and thermal efficiency of an engine. Additionally, there is a latent need to improve the efficiency of other internal combustion engines such as stationary gensets and air handling systems for feeding fuel-cells.

Aerodynamic matching of the exhaust driven turbocharger turbine, or compressor, involves a compromise between transient response at low load and power targets at high load. Due to this trade off, the drive for ultimate efficiency at certain running points can in turn adversely impact running points at other engine running conditions, which is undesirable both from a driver satisfaction and an engine emissions viewpoint.

One of the possible solutions to this problem is to provide electrified turbomachinery or electric turbomachines, which are known as an electric compressor or electric supercharger, to provide additional boost pressure.

In the electric turbomachines, a high-speed electrical machine, such as a permanent magnet synchronous motor, is used, for example, to accelerate the compressor component of the electric turbomachinery to provide additional boost pressure to the engine or to accelerate the compressor of the turbocharger to reduce response times. A high-speed electrical machine is considered to be an electrical machine where the magnetic rotor surface reaches speeds in excess of 80 m/s and even greater than 200 m/s. Typically, if the electrical machine is directly attached to the compressor or another turbomachine then it is classified as high-speed.

However, several issues with current electrified machinery technology has prevented their wider proliferation within the market. For example, electrified machinery requires power electronics systems to convert the direct current (DC) available from the vehicle's power system to the alternating current (AC) required to power suitable high-speed electrical machines such as permanent magnet synchronous motors. The power electronic systems typically comprise both power printed circuit board assemblies (power PCBA) and control printed circuit board assemblies (control PCBA). Both of these PCBAs comprise heat sensitive components and components that generate substantial heat such as capacitors and transistors. Accordingly, the power PCB and the control PCB typically require complex, separate cooling systems. These cooling systems not only thermally protect the power PCBA and the control PCBA by removing heat, or cooling, that they themselves generate, but the cooling systems also remove heat emitted by electric turbomachine (e.g. from the high-speed electrical machine and the heat of the compressed fluids of the compressor) and the high-ambient temperatures that are produced by the internal combustion engine itself.

The cooling systems are typically dedicated water-cooled jackets or heat sinks for cooling individual components or component groups. For example, a dedicated water-cooled jacket, radiator and pump can be included to cool the power electronics assembly and a separate water-cooled jacket, radiator and pump can be included to cool the electrical machine of the electric turbomachine. However, the inclusion of these dedicated water-cooled jackets or heat sinks is undesirable due to their size, weight, reliability, lifetime and maintenance.

Additionally, electric turbomachine applications require a very high lifetime requirement, without component replacement, to be economically and practically viable. As such, it is important that all components of the electric turbomachine, such as the electrical machine, power PCBA and control PCBA are kept below their heat rating. Thus, providing adequate cooling to the electric turbomachine and its associated components is a key factor in their design.

An additional problem associated with the power electronics of electric turbomachines is that the provision of the power PCBA and the control PCBA and their cooling systems typically increases the footprint and weight of the electric turbomachine to such a degree that incorporating the electric turbomachine in close proximity with the internal combustion engine of the vehicle, as is required for optimal performance, is challenging. Further, they are tight constraints on space envelope, for packaging purposes. As such, decreasing the size of components or eliminating them entirely is desirable.

In the state of the art, power electronics assemblies are installed separately away from the electric turbomachine and, for example, the internal combustion engine. This makes it possible to enable operation of the power electronics systems (i.e. the control PCBA and the power PCBA) within a cooler and more benign environment. This have the benefit of having a reduced cooling demand and may allow the design of more compact power PCBAs and control PCBAs. However, the applicant has found this approach to be disadvantageous as it requires at least one additional cooling circuit, additional electrical power, additional electrical signals and additional mounting features. These additional features plus their requisite (electrical & coolant) connections and environmental sealing requirements increase the installation complexity, maintenance complexity, size, weight and associated failure modes of the electric turbomachine.

One solution is to produce a more compact implementation of design and separate features that could be accommodated within the space allocation. However, the applicant has found that the drawbacks of this method, such as the complex manufacturing techniques and increased costs are disproportionately large to the advantages.

Another problem with state of the art turbomachines is that the stator of the electrical machine self-generates a large amount of heat; if this heat is not removed efficiently then the heat that it emits can cause very short component lifetime.

EP 2,305,981 relates to and electrical turbocharger having a plurality of components and an associated cooling device.

KR 2019/0106021 relates to a supercharger in which a cooling flow path through which a cooling fluid is distributed is formed to prevent air supplied to the inside of the supercharger from overheating.

WO 2014/209873 relates to a charging apparatus provided with a brushless DC motor which uses a laminated, undercut structure as a stator winding.

Objects and aspects of the present invention seek to alleviate at least these problems with the prior art.

### Summary of the Invention

According to the present invention there is provided an electric turbomachine for use with an internal combustion engine, turbocharger or a fuel cell e-compressor, said electric turbomachine comprising: a compressor that is arranged to compress fluid within a turbo compressor when it is rotationally driven about a rotational axis (R) by a shaft, said shaft being rotational supported by a drive-end bearing and a non-drive-end bearing, and a high-speed electrical machine located within a housing that is arranged to rotationally drive the shaft about the rotational axis (R); said housing comprising a drive-end wall that the shafts extends through to rotationally drive the compressor, a non-drive-end wall at the opposing end of the electric turbomachine to the compressor, and a side wall that extends between the drive-end wall and the non-drive-end wall, and wherein the electric turbomachine comprises a cooling system, for receiving a flow of a coolant fluid to cool the electric turbomachine, that is integrated within the housing of the electric turbomachine, wherein the cooling system comprises a side wall coolant cavity located within the side wall for receiving a flow of coolant fluid to cool the electric turbomachine, characterised in that the side wall coolant cavity is arranged to cool the electrical machine and power electronics that are mounted on an exterior surface of the side wall.

The cooling system (or as it may also be known the cooling circuit) is integrated within the housing in that the coolant fluid used to cool the electric turbomachine in use flows through the inside walls of housing of the electric turbomachine. That is, the housing that usually surrounds the electrical machine of the electric turbomachine comprises cavities, holes, apertures, conduits or the like for receiving a flow of coolant fluid to cool the electric turbomachine. In general, housings of the electric turbomachines are fabricated from metal so the housing possess good or excellent thermal conductivity. Thus, the housing itself can conduct heat from the heat-generating components of the electric turbomachine to the integrated cooling system. As such, the present invention efficiently uses previously dead or wasted space within the housing and electric turbomachine.

The fluid that is compressed by the electric turbomachine depends on the use and deployment of the electric turbomachine. Typically, the fluid compressed by the compressor in use is air or exhaust fluids from an internal combustion engine, for example, however other fluids may also be compressed.

In this way, the cooling system is integrated into the housing of the electric turbomachine and the need to provide separate, independent and/or external cooling systems, such as heat sinks and cooling jackets, is reduced or eliminated altogether. This reduction or elimination of independent, separate and/or external cooling systems beneficially reduces the weight, volume, size, footprint, number of associated failure points and installation and maintenance complexity of electric turbomachine.

It is envisaged that the coolant fluid will flow through and directly contact the housing such that the coolant fluid will not flow through additional piping inside the housing. However, it is also envisaged that the cooling system may optionally comprise corrosion or rust resistant inserts or sheaths that also possess high thermal conductivity such as galvanised steel or brass.

One benefit of this direct contact between the housing and the coolant fluid is that the direct contact reduces and/or minimises the number of interfaces between the heat-generating components and coolant fluid. These interfaces, and in particular air interfaces, limit the rate of heat transfer and are typically present in heat-sinks and cooling jackets for example.

Additionally, integrated the cooling system into the housing means that, in use, the coolant fluid flows through locations closer to the heat-generating components of electric turbomachine and therefore cool the electric turbomachine more efficiently. Thus, it is envisaged that the rate of flow or the volume of the coolant fluid can be decreased to achieve the same cooling effect. Accordingly, it is envisaged that, in use, the pump used to pump coolant fluid around the cooling system integrated within the housing will be smaller and require less power than a pump for use with an external cooling jacket for example.

Preferably, the cooling system comprises a drive-end coolant cavity located within the drive-end wall for receiving a flow of coolant fluid to cool the electric turbomachine. In use, the drive-end of the electric turbomachine is typically situated near separate or external heating-generating components such as an internal combustion engine, turbocharger or a fuel cell e-compressor. Additionally, the action of the compressor within the turbo compressor also generates heat proximate to the exterior side of the drive-end wall. Furthermore, the drive-end wall is typically proximate to the drive-end bearing which also generates heat. Moreover, the drive-end wall and drive-end cooling cavity is proximate to the heat-generating high-speed electrical machine. Thus, the drive-end coolant cavity can perform triple-sided cooling for each of the heat-generating components mention above. The cooling system having a drive-end coolant cavity helps to remove heat from the electric turbomachine, thereby protecting heating sensitive components, such as the electrical machine, from all of these sources of heat.

Preferably, the drive-end coolant cavity encircles the shaft as it extends through the drive-end wall. By encircling the shaft, the drive-end coolant cavity cools an area all around the drive-end wall surrounding the shaft and, thus, prevents the formation of hotspots and provides effective cooling of the drive-end wall. Preferably, the drive-end coolant cavity is torus-shaped or toroid-shaped.

Preferably, the drive-end coolant cavity is arranged to cool the drive-end bearing. In such embodiments, the drive-end coolant cavity is positioned close enough to the drive-end bearing to absorb the heat generated by the drive-end bearing. This is beneficial to prevent the drive-end bearing from overheating and having a decreased lifespan by, for example, damaging the grease in the bearing.

Preferably, the drive-end coolant cavity encircles the drive-end bearing. By encircling the drive-end bearing, the cooling effect of the drive-end coolant cavity is increased on the drive-end bearing as it ensures the entire circumference of the drive-end bearing is cooled. This prevents the formation of hotspots within the drive-end bearing.

Preferably, the cooling system comprises a non-drive-end coolant cavity located within the non-drive-end wall for receiving a flow of fluid coolant to cool the electric turbomachine. The non-drive-end wall and non-drive-end cooling cavity are typically proximate to one end of the heat-generating high-speed electrical machine and remove heat generated by the electrical machine. Additionally, the electrical connections that provide power to the electrical machine are typically located at this end and the non-drive-end cooling cavity can also cool these connections, or the area that they are housed within, as well.

Preferably, the non-drive-end coolant cavity is arranged to cool the non-drive end bearing. In such embodiments, the non-drive-end coolant cavity is positioned close enough to the non-drive-end bearing to absorb the heat generated by the non-drive-end bearing. This is beneficial as it prevents the drive-end bearing from overheating which shortens its lifespan by, for example, damaging the grease in the bearing.

Preferably, the non-drive-end bearing is located proximate to the non-drive-end wall within a bearing housing and the bearing house is thermally connected to the non-drive-end wall. In this way, the non-drive-end bearing is not situated within the non-drive-end wall. Distancing the non-drive-end bearing from the non-drive-end can be beneficial when a temperature sensitive component, such as a magnet, is incorporated onto the end of the shaft adjacent to the non-drive-end wall.

Preferably, the non-drive-end coolant cavity encircles the non-drive end of the shaft. By encircling the shaft, the cooling effect on the non-drive-end coolant cavity is increased on the shaft and components connected to or associated with shaft, as it ensures the entire circumference of the shaft is cooled. Preferably, the non-drive-end coolant cavity is torus-shaped or toroid-shaped.

Preferably, the non-drive-end coolant cavity encircles the non-drive end bearing. By encircling the bearing, the cooling effect on the non-drive-end coolant cavity is increased on the bearing and components connected to or associated with the bearing. Preferably, the non-drive-end coolant cavity is torus-shape or toroid-shaped.

Preferably, the non-drive-end coolant cavity is arranged to cool a power electronics that are mounted on an exterior surface of the non-drive-end wall. Mounting power electronics assemblies, such as a control printed circuit board, onto the non-drive end wall of the housing is beneficial as it reduces the size of the electric turbomachine and its associated electronics. The power electronics that is mounted in this preferred embodiment, such as the control PCB, generate heat and in the prior art when they are not mounted on the housing they typically have their own independent and separate cooling systems. Furthermore, mounting the power electronics assemblies on the non-drive-end wall exposes the temperature sensitive components of the power electronics to the heat generated by the electric turbomachine. These problems are overcome in this preferred embodiment as the power electronics are cooled by the cooling system and, in particular, by the non-drive-end coolant cavity. This removes the need for an independent and separated cooling system for the power electronics, such as the control printed circuit board, reducing the size and complexity of the electric turbomachine.

Preferably, the non-drive-end coolant cavity comprises one or more plate-like or disc-like portions that are arranged to cool the power electronics that is mounted on the exterior surface of the non-drive-end wall. Preferably, the largest diameter of the plate-like or disc-like portions extend in a direction parallel with the non-drive-end wall to provide efficient cooling of the mounted power electronics.

Preferably, the non-end-drive coolant cavity is arranged to cool a control printed circuit board that is mounted on the exterior surface of the non-drive-end wall. Such an arrangement may optionally comprises larger portions of the non-drive-end coolant cavity located proximate to heat generating components of the control printed circuit board, such as the capacitors located on the control printed circuit boards. In this way, the need or size of the independent or separate cooling system used to cool the control printed circuit board is reduced or removed entirely.

The cooling system comprises a side wall coolant cavity located within the side wall for receiving a flow of coolant fluid to cool the electric turbomachine. The side wall and the side wall coolant cavity are typically located adjacent or proximate to heating generating components of the electric turbomachine and can remove heat from these components and the electric turbomachine as a whole.

The side wall coolant cavity is arranged to cool the electrical machine. The side wall coolant cavity is located close enough within the side wall to extract the heat generated by the high-speed electrical machine. In the prior art the cooling for the electrical machine is located external and removed from the housing. This reduces the effectiveness of the cooling as it is separated by a greater distance and increased number of interfaces from the electrical machine, thereby reducing the efficiency of the electrical machine. Accordingly, the present invention is beneficial as it provides an improved rate of cooling of the high-speed electrical machine such that the electrical machine is more efficient.

Preferably, the side wall coolant cavity encircles the electrical machine. By encircling the electrical machine the side wall coolant cavity provides a cooling effect around the entire circumference of the electrical machine.

Preferably, the side wall coolant cavity comprises a helical coolant cavity that encircles the electrical machine. The helical coolant cavity is beneficial as it loops through the side wall and around the electrical machine encircling it. This again provides effective cooling around the entire circumference of the electrical machine. Furthermore, the helical configuration of the helical coolant cavity spirals around the electrical machine providing a relatively narrow pathway for the flow of the coolant fluid. Thus, the helical configuration improves circulation and the cooling effect of the coolant fluid by reducing turbulence of the coolant fluid compared to, for example, a simple cylindrical coolant cavity.

Preferably, the side wall coolant cavity extends along the full length of the electrical machine. By extending along the full length of the machine, the cooling effect of the side wall coolant cavity is experienced by more of the electrical machine. Even more preferably, the helical coolant cavity extends along the full length of the electrical machine. Such a helical coolant cavity provides cooling for the electrical machine both around its entire circumference and its entire length.

The side wall coolant cavity is arranged to cool power electronics that are mounted on an exterior surface of the side wall. Mounting power electronics, such as a power printed circuit board, on the side wall of the housing is beneficial to reduce the size of the electric turbomachine. The power electronics that is mounted in this embodiment, such as the power printed circuit board, generate heat and in the prior art when they are not mounted on the housing they typically have their own independent and separate cooling systems. Furthermore, mounting the power electronics on the side wall exposes the temperature sensitive components of the power electronics to the heat generated by the electric turbomachine. These problems are overcome in this preferred embodiment as the power electronics, e.g. the power printed circuit board, are cooled by the cooling system and, in particular, by the side wall coolant cavity. This removes the need for an independent and separated cooling system for the power electronics, such as the power printed circuit board, reducing the size and complexity of the electric turbomachine.

Preferably, the side wall coolant cavity is arranged to cool a power printed circuit board that is mounted on the exterior surface of the side wall. In this way, the need or size of the independent or separate cooling system used to cool the power printed circuit board is reduced or removed entirely.

Preferably, the side wall coolant cavity is arranged to cool a plurality of power printed circuit boards that are mounted on one or more exterior surfaces of the side wall.

Preferably, the majority of the side wall coolant cavity is formed between an interior surface of the side wall and a surface of a jacket that supports the electrical machine. More preferably, the majority of the side wall coolant cavity is formed between an interior surface of the side wall and one or more channels in the surface of a jacket that supports the electrical machine. Typically, the jacket in an electric turbomachine helps to position the electrical machine within the housing by engaging and supporting the electrical machine and housing. By forming the side wall coolant cavity between the jacket and the side wall, the coolant cavity flows closer to the electrical machine and the cooling effect of the side wall coolant cavity is increased.

Alternatively, the majority of the side wall coolant cavity is formed within the side wall of the housing. Or, in other words, the jacket for supporting the electrical machine is integrally formed with the housing of the electrical machine. This is beneficial as it reduces the number of components while retaining the advantageous close proximity between the electrical machine and the side wall coolant cavity.

Preferably, the cooling system comprises a drive-end coolant cavity as described in any of the optional or preferred embodiments above, a non-drive-end cavity as described in any of the optional or preferred embodiments above and a side wall coolant cavity as described in any of the optional or preferred embodiments above. In this way, the benefits of one or more of the coolant cavities can be combined and synergised.

Preferably, the drive-end coolant cavity, the non-drive-end coolant cavity and the side wall coolant cavity are fluidly connected to one another to form a continuous pathway inside the housing for receiving a flow of coolant fluid to cool the electric turbomachine. In this way, the three coolant cavities are linked and connected to one another. This means that only one set of piping and pump needs to be supplied to generate the flow coolant fluid. As described above, the three coolant cavities each cool various features individually and connecting them together means that they can cool most if not all of the electrical turbomachine and/or have an increased cooling effect on a particular feature of the electric turbomachine. This reduces the size and complexity of cooling systems associated with the electric turbomachine.

Preferably, the fluid connections between the drive-end coolant cavity, non-drive-end coolant cavity and the side wall coolant cavity are integrated within the drive-end wall, non-drive-end wall and the side wall. The integration of the connections between coolant cavities is beneficial as it minimises the chances of leaks and from, for example, piping connections, helps to minimise the size of the cooling system and improves the cooling effect of the cooling system.

Preferably, the drive-end coolant cavity is fluidly connected to the side wall coolant cavity, and the side wall coolant cavity is fluidly connected to the non-drive-end coolant cavity. Connecting the coolant cavities in this configuration provides a continuous path for the coolant fluid from the drive-end wall through the side wall to the non-drive-end wall or vice versa.

Preferably, the cooling system is arranged such that, in use, coolant fluid flows into the cooling system via an inlet into the non-drive-end wall cavity and coolant fluid flows out of the cooling system via an outlet from the drive-end wall cavity. This configuration of the coolant cavities is beneficial as typically the temperature of the turboelectric machine increases from non-drive end across the machine to the drive-end. Accordingly, supplying coolant fluid at the non-drive-end coolant cavity and extracting it from the drive-end coolant cavity means that the coolant fluid flows in the same direction as the temperature gradient of the electric turbomachine, thereby improving the cooling effect of the cooling system.

Preferably, the cooling system is the only system used to actively cool the electric turbomachine. That is, the cooling system supplies a sufficient cooling effect such that additional active cooling systems, coolant fluid or heat sinks are not required to operate the electric turbomachine. The electric turbomachine may also be cooled passively via normal convention or ambient conditions associated with placing the electric turbomachine in a working environment such as an engine bay. Preferably, the cooling system provides more than 80% of the cooling required by the electric turbomachine. More preferably, the cooling system provides more than 90% of the cooling required by the electric turbomachine.

Preferably, the electric turbomachine is an electric compressor.

As discussed above, the power electronics can be mounted onto the housing of the electric turbomachine. It is preferable in such embodiments that the power electronics do not extend beyond the footprint of the electric turbomachine. Reduction in footprint refers to a reduction in the packaging size of the electric turbomachine. These embodiments achieve this by reducing the diameter of the electric turbomachine as the power electronics do not extend beyond the maximum diameter defined by the housing and/or turbo compressor of the electric turbomachine.

The power electronics may be directly mounted onto the electric turbomachine by splitting the power PCB of the power electronics into three triplicated circuits. Each of the three power PCBs is smaller than a monolithic power PCB, even if cumulatively the size of the three power PCBs is similar to that of a monolithic PCB. However, by using separate and smaller power PCBs, it is possible to arrange these PCBs around the machine, staying within the outline of the machine and, essentially, within the overall confines of the space allocated.

Furthermore, the control PCB may be integrated onto the non-drive-end and non-drive-end wall of the electric turbomachine. By separating, the control PCB from the power PCB, the size and complexity of the power PCB is reduced such that the power PCB can be more easily incorporated about the housing of the electric turbomachine. Additionally, mounting the control PCB directly onto the non-drive-end and non-drive-end wall enables the control PCB to directly comprise the sensor for detecting the rotational speed of the electrical machine. Removing the need for additional circuitry and failure points.

Accordingly, these preferred embodiments overcomes the issues associated with using a single monolithic power electronics assembly that the resulting aspect and volume is not readily accommodated within the space allocation of the electric turbomachine, and that its mounting features be extensive and non-conducive either in terms of minimising cost of materials or efficient use of available volume.

The present invention provides an electric turbomachine in which the cooling system or cooling circuit for cooling the electric turbomachine, and optionally the electrical machine and power electronics of the electric turbomachine, is integrated within the housing of the electric turbomachine. A cooling system of this nature can be provided by including a series of cavities or conduits that flow through the housing. The cooling system can be arranged such that the coolant fluid within the cooling system flows from the non-drive-end end to the drive-end along an increasing temperature gradient.

By integrating the cooling system or cooling circuit within the housing of the electric turbomachine the housing itself is cooled and thereby cools any connected or nearby components. Further, providing the cooling system or cooling system within the housing means that the cooling is provided in a location as close to the heat generating or heat sensitive component as possible. For example, a coolant cavity of cooling system may be proximate to the high-speed electrical machine. This is beneficial as the high-speed electrical machine self-generates substantial amounts of heat that would significantly shorten the lifetime of the electrical machine without cooling. Another example is that the cooling system may be proximate to the drive-end bearing helping to prolong the life of the bearing.

In this way, integrating the cooling system or circuit within the housing reduces the number of parts and associated failure points, efficiently uses previously dead or wasted space within the housing and electric turbomachine.

The electric turbomachine may optionally comprise a power electronics assembly mounted and provided directly on the housing of the electrical turbomachine, in addition to a cooling system or circuit in accordance with the present invention. Such a combination of features is beneficial for a number of reasons.

Firstly, the transistors mounted on the power PCBs self-generate heat; if this heat is not removed then its temperature rises leading to a very short component lifetime. By mounting the power PCBs onto the housing of the electrical turbomachine, the cooling circuit within the housing used to cool the electrical machine can additionally cool the power PCBs simultaneously. That is, the cooling circuit can perform double sided cooling. This eliminates the need for a separate power PCB cooling system reduce size, complexity and the number of failure points.

### Detailed Description

Embodiments of the present invention will now be described by way of example only and with reference to the accompanying drawings, in which:
Figure 1 is a cross-section of an electric compressor in accordance with the present claimed invention;
Figure 2 is a perspective view of a section of the electric compressor of Figure 1;
Figure 3 is a second perspective view of a second section of the electric compressor of Figure 1, where electric compressor includes the compressor;
Figure 4 is a perspective view of the exterior of the electric compressor of Figure 1, and in particular the power PCBs, where the power cover has been omitted;
Figure 5 is an exploded perspective view of the features shown in Figure 4;
Figure 6 is the perspective view of the electric compressor of Figure 4, where the power cover is included;
Figure 7 is a cross-section of the electric compressor of Figure 1, where the pathway of the cooling system remains in the half of the machine removed in the cross-section; and
Figure 8 is a schematic layout of an electric compressor connected to an internal combustion engine in accordance with the present claimed invention.

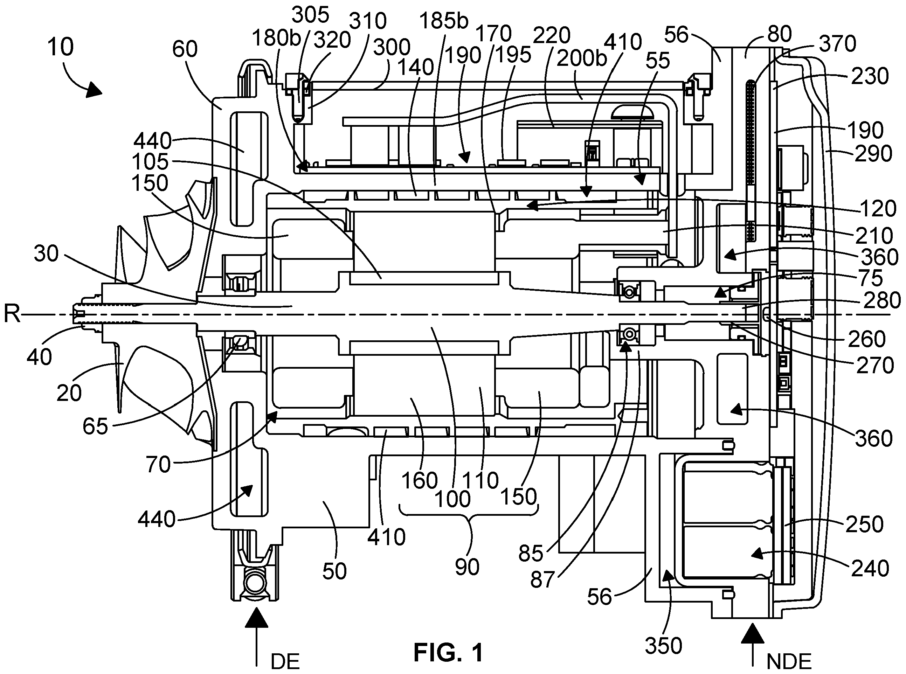

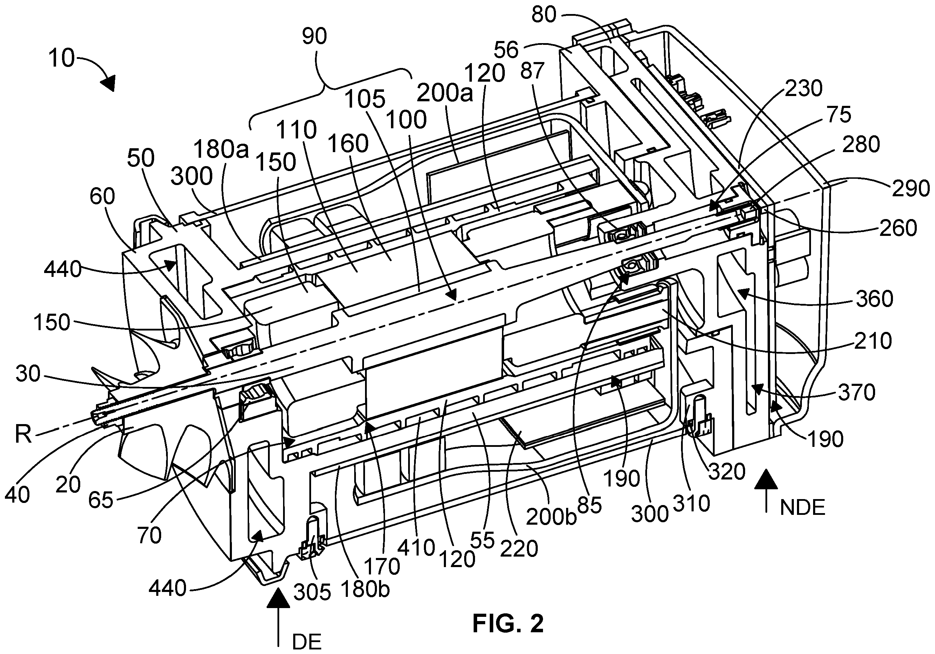

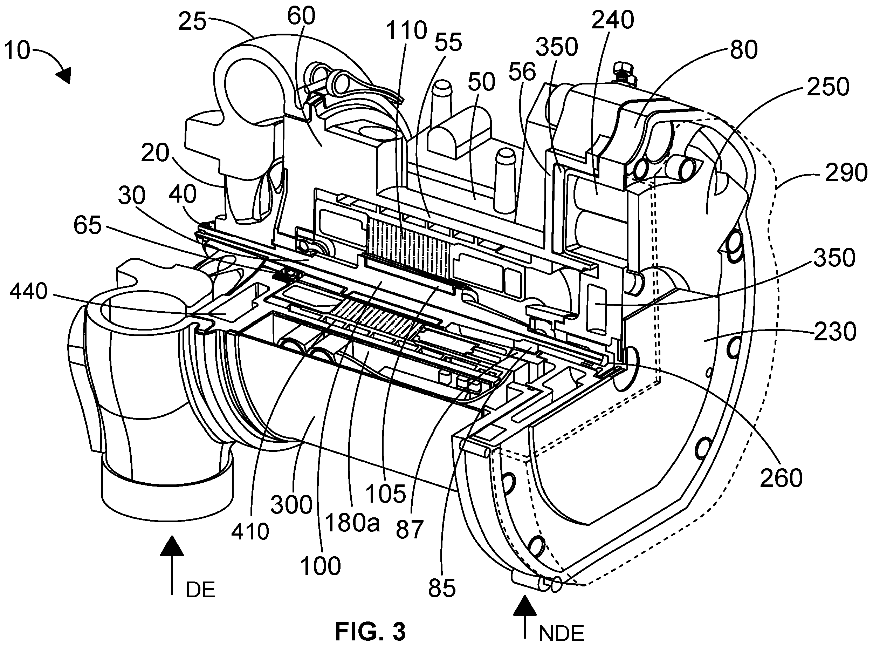

Referring to Figures 1 to 3 of the drawings, there is depicted a cross-section, a first perspective sectioned view and a second perspective sectioned view of an electric compressor 10, in accordance with the present claimed invention. The electric compressor 10 comprises a compressor 20 situated within a turbo compressor 25. The compressor 20 is connected to a shaft 30 by a threaded fixing 40. The compressor 20, turbo compressor 25 and threaded fixing 40 are known in the state of the art and are not within the scope of the invention.

The shaft 30 protrudes from its fixing with the compressor 20 through the rear-side of the compressor 20 into the housing 50 of the electric compressor 10. The end of the housing 50 adjacent to the compressor 20 is the drive-end (DE) of the housing 50 and electric compressor 10, and the opposing end of the housing 50 and electric compressor 10 removed from the compressor 20 is known as the non-drive-end (NDE).

The wall of the housing at the DE of the housing 50 is known as the drive-end wall 60 and the wall of the housing at the NDE of the housing 50 is known as the non-drive-end wall 80. The NDE wall 80 and DE wall 60 are connected by a side wall 55 of the housing 50 that extends between them.

The shaft 30 extends through the DE wall 60 of the housing 50 through the generally cylindrical central cavity 70 inside the housing 50 towards the NDE wall 80. The DE wall 60 and the NDE wall 80 are separated by the side wall 55 of the housing 50. The interior side of the side wall 55 is generally cylindrical helping to give the central cavity 70 its generally cylindrical shape. The DE wall 60 and the side wall 55 of the housing 50 are integrally formed from a single piece of aluminium. The NDE wall 80 of the housing 50 is a separate piece that is fixed in position onto the housing 50 by fixings between flanges 56 at the end of the side walls 55 and the NDE wall 80. In this embodiment, the NDE wall 80 is made aluminium because of its excellent thermal conductance; however, other embodiments are envisaged in which the metals or materials are envisaged. The NDE wall 80 can be removed from the housing 50 to provide access to the central cavity 70.

The shaft 30 is mounted on two bearings: the DE bearing 65 and the NDE bearing 85. The DE bearing 65 is situated within the DE wall 60 and located between the compressor 20 and the rest of the electric turbomachine 10 such as the central cavity 70. The NDE bearing 85 is located adjacent to the NDE wall 80 in a bearing housing 87. The bearing housing 87 is attached via an interference fit to the interior side of NDE wall 80. The bearing housing 87 thermally connects the NDE bearing to the NDE wall.

The shaft 30 is arranged to be rotated about rotational axis R by a high-speed electrical machine 90 that is located within the central cavity 70 of the housing 50. The rotational axis R is parallel and coaxial with the longitudinal axis of the shaft 30. The DE wall 60 and the NDE wall 80 are substantially perpendicular to the rotational axis R of the shaft 30, and the side wall 55 is substantially parallel to the rotational axis R of the shaft 30.

The shaft 30 comprises a rotor portion 100 that is the rotor of the electrical machine 90. The rotor portion 100 comprises permanent magnets 105 embedded of the surface of the shaft 30. In alternative embodiments, the permanent magnets 105 are embedded within the interior of the shaft. The rotor portion 100, and shaft 30, extend through the stator 110 of the high-speed electrical machine 90. In this embodiment, the electrical machine 90 is a permanent magnet synchronous motor and the rotor portion 100 and stator 110 are configured in line with the state of the art. The rotor 100 and stator 110 are located approximately centrally along the length of the shaft 30 and approximately centrally between the DE wall 60 and the NDE wall 80 of the housing 50.

Surrounding the electrical machine 90 is a jacket 120. The jacket 120 is generally cylindrical is located around the circumferential walls of the stator 110 such that the jacket 120 is located between the stator 110 and the side wall 55 of the housing 50. In this way, the jacket 120 acts as an EMI shield for the electrical machine 90. The jacket 120 also comprises a plurality of cooling channels 130. The cooling channels 130 are grooves or recesses in the outside surface of the jacket 120. The cooling channels 130 in combination with the inside surface of the side wall 55 define a helical cooling cavity 140 which are arranged for a flow of coolant fluid around the circumference of the jacket 120 and stator 110. In this way, the jacket 120 is arranged to cool the electrical machine 90. The cooling of the electric compressor 10, and electrical machine 90, is discussed in depth later.

The stator 110 comprises windings 150 that extend from either end of the substantially cylindrical stator member 160 into the central cavity 70 of the housing 50. The windings 150 are configured such that the electrical machine 90 is a threephase motor as is known in the state of the art. Further embodiments are envisaged where the motor is a six-phase or a nine-phase motor for larger electrical machines.

The stator member 160 is held in place inside the central cavity 70, relative to the rotor portion 100, by the jacket 120, where the substantially cylindrical stator member 160 sits within and is fixed in place by a friction fit with a shoulder 170 in the interior surface of the jacket 120.

The NDE end of windings 150 is electrically connected to a power PCB 180a of power electronics assembly 190, or power electronics by an AC busbar 200a and a first electrical connection member 210. In this embodiment, the power PCB is split up into three separate power PCBs 180a, 180b, 180c, where each power PCBs 180a, 180b, 180c is connected by one of the three separate AC busbars 200a, 200b, 200c to the winding 150 of the stator 110. The windings 150 are then connected to one another by a star connection.

Each of power PCBs 180a, 180b, 180c comprises substantially the same circuitry, including transistors 195, such that this circuitry is triplicated within the power electronics assembly 190. Other embodiments are envisaged where the power PCB is not split or alternatively split into a number of boards, e.g. two or six. It is preferred that the PCB is split into the number of phases of the electrical machine 90 or motor.

The electrical connection member 210 extends through the central cavity 70 from the windings 150 towards to NDE wall 80. From the electrical connection member 210, the respective AC busbar 200a, 200b, 200c extends up and through the side wall 55 of the housing 50 in a direction substantially perpendicular to the rotational axis R and is electrical connected to the power PCB 180a. Each of the AC busbars 200a, 200b, 200c electrically connects the windings 150 at a single point to the AC supplied by its respective power PCB 180a, 180b, 180c. The AC busbar 200a, 200b, 200c is of the braided-type such that it can withstand the heating changes and vibrational forces generated during the lifetime of the machine.

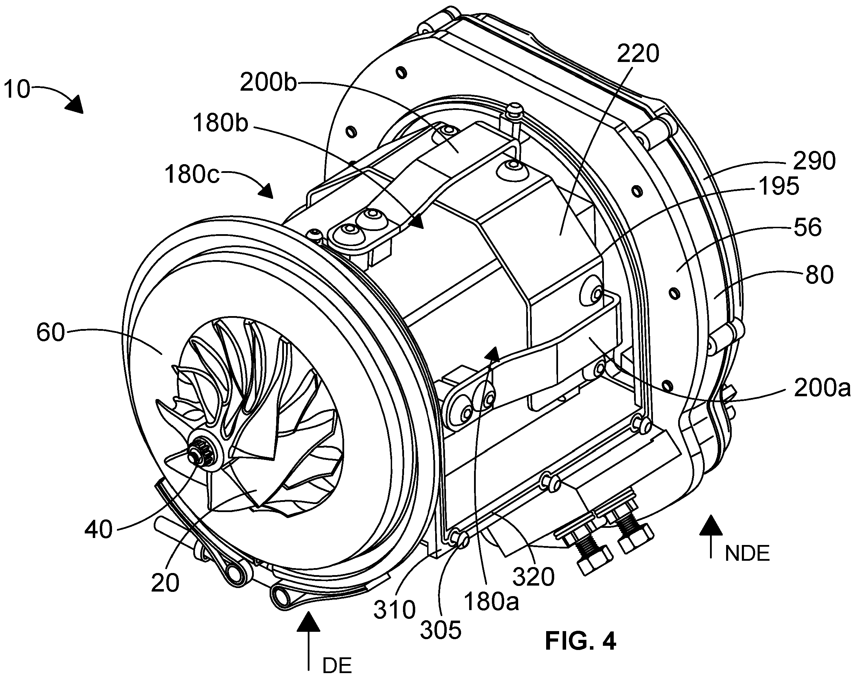

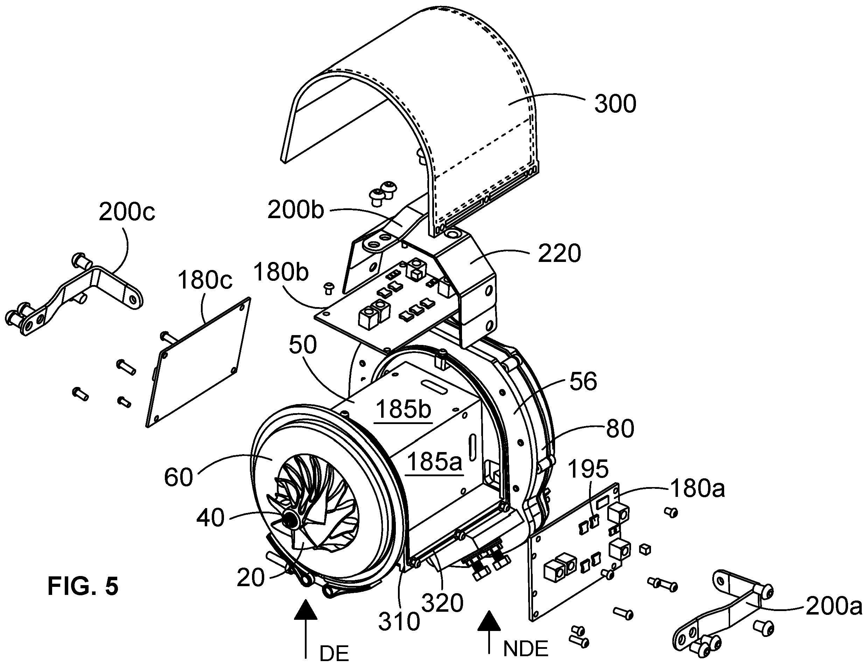

Referring to Figures 4 and 5 drawings, the configuration of the three power PCBs 180a, 180b, 180c is depicted in a perspective view and an exploded perspective view. In this embodiment, as is shown in the drawings each of the power PCBs 180a, 180b, 180c is mounted on the side wall 55 of the housing 50, and lies in a plane substantially perpendicular with the rotational axis R. That is, the three power PCBs the 180a, 180b, 180c are mounted on three separate flat surfaces 185a, 185b, 185c on the exterior of the side wall 55 of the housing 50. Each of the three flat surfaces 185a, 185b, 185c lies in a plane substantially parallel with the rotational axis R of the shaft and is substantially planar and rectangular.

The three flat surfaces 185a, 185b, 185c are configured in a generally square-bottomed U-shape relative to one another, such that one flat surface 185b is substantially perpendicular to the other two substantially parallel flat surfaces 185a, 185c. Or, in other words, the three flat surfaces 185a, 185b, 185c occupy three sides of a square. The three power PCBs 180a, 180b, 180c are each mounted onto one of the flat surfaces 185a, 185b, 185c, such that they are also configured in a generally square-bottomed U-shape relative to each other. Other arrangements of the three flats surface 185a, 185b, 185c and the power PCBs 180a, 180b, 180c, mounted thereon are envisaged, such as a generally triangular arrangement, a pentagonal arrangement or a hexagonal arrangement etc., where the power PCBs are mounted on some or all of the arrangements surfaces.

All three of the power PCBs 180a, 180b, 180c are supplied with DC power by a DC link busbar 220. The DC link busbar 220 is connected by two electrical connections 235 to the power PCBs 180a, 180b, 180c. Each of the power PCBs 180a, 180b, 180c acts as an inverter using power electronics as is known in the state of the art. The DC link busbar 220 is generally U-shaped such that it can connect with each of the three power PCBs 180a, 180b, 180c simultaneously.

Splitting the power PCB into three separate power PCBS 180a, 180b, 180c enables the power PCB to be mounted on the side wall 55 of the housing 50 without extending beyond the circumferential footprint of the DE wall 60, the turbo compressor 25. Or, in other words, the power PCB 180a, 180b, 180c does not increase the maximum diameter, or distance from the rotational axis R, of the electric compressor 10. Instead, this maximum diameter or distance from the rotational axis R is defined by the compressor 25 of the art. In this way, splitting the power PCB 180a and incorporating it onto the side of the housing 50 of the electric compressor 10 compacts it. That is, splitting the power PCBs 180a, 180b, 180c substantially reduces the size of the electric compressor 10 as the power PCB 180a, 180b, 180c is not a monolithic PCB and can fit closely and around the components of the electric compressor 10 that are harder to reduce in size. Compacting the electric compressor 10 is on particular importance in vehicle applications due to the limited size in an engine bay of a vehicle. Splitting the power electronics assembly 190 further can help reduce the mass of the electric compressor 10 that is also beneficial in vehicles.

Referring back to Figures 1 to 3, the DC power supplied to the DC link busbar 220 is supplied by the input busbar 250. The input busbar 250 is mounted on the exterior side of the NDE wall 80. The input busbar 250 receives DC electric from a DC source such as a battery in a vehicle. In this embodiment, the electric compressor 10 and its components are configured in this embodiment to work with a 48 V DC supply that is used to power a modern hybrid power train in a vehicle. Other embodiments are envisaged using a DC power supply in the range of 12 to 800+ V.

Further, the input busbar 250 comprises capacitors 240 that are located on the input busbar 250 and receive power from the DC power supply. The capacitors 240 are located within the NDE wall 80 of the electric compressor 10. The input busbar 250 and the capacitors 240 are mounted on the NDE wall 80 thus limiting their footprint.

The control PCB 230 controls the DC power supplied by power PCBs 180a, 180b, 180c to the electrical machine 90 in relation to in relation to the desired speed of electrical machine 90 to achieve the desired boost pressure for the internal combustion engine associated with the electric compressor 10. The main parameter that the control PCB 230 will request is the speed of the compressor 20 such that the control PCB 230 can control the high-speed electrical engine 90 to provide to boost pressure required. The control PCB 230 may also preferably receive and process inputs from the internal combustion engine such as power demand, power output, efficiency, emissions of the internal combustion engine as well as the temperature and pressure inside the internal combustion engine. In embodiments, where the electric compressor 10 is used in tandem with a turbocharger the control PCB 230 may also receive information regarding the turbocharger speed and boost pressure.

The control PCB 230 comprises a sensor 260 for detecting of the speed rotation of the shaft 30, i.e. speed of the electrical machine 90. The sensor 260 is mounted directly on the control PCB 230 and is located on the rotational axis R of the shaft 30. The shaft 30 itself extends into a sensor portion 75 of the central cavity 70, where the sensor portion 75 is substantially cylindrical and extends from the end of the windings 150 towards the NDE wall 80. The sheath 270 holds the permanent magnet 280 in a position within a sensor portion 75 of the central cavity 70 adjacent to, but not engaging, the rear side of the NDE wall 80. As such, the permanent magnet 280 mounted onto the shaft 30 proximate to the rear side of the control PCB 230, and more specifically, the sensor 260. The speed of the electrical machine 90 is sensed directly by the control PCB 230 by the sensor 260 sensing the rotation of the magnetic fields of the magnet 280. The sensor 260 and permanent magnet provides an acceleration advantage for the high-speed electrical machine. Embodiments of the electrical turbomachine 10 that do not comprise the sensor 260 and permanent magnet 280 are envisaged. The control PCB 230 is protected by a control cover 290 that completely encapsulates the control PCB 230 in a watertight and airtight manner.

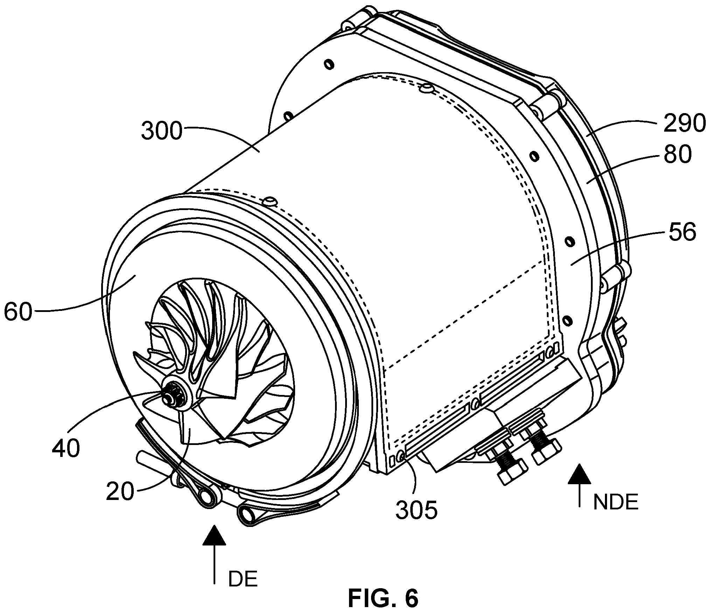

Referring to Figure 5 and 6 of the drawings, there is depicted a power cover 300 for covering and protecting the power PCBs 180a, 180b, 180c. The cover 300 is arranged to be fixed by screws 305 onto a rim 310 of the housing 50. The cover 300 is generally U-shaped and is integrally formed from a single piece. When the cover 300 is attached to the rim 310 of the housing 50, a rubber seal 320 is sandwiched between the cover 300 and the rim 310. The rubber seal 320 is compressed between the cover and the rim 310 to give a watertight seal. Using a single cover, the power cover 300, reduces the number of egress points and point points of failure of fluids.

Accordingly, due to the control cover 290 and power cover 300, the electric compressor 10 can be used in vehicles as the power electronics assembly 190 is sufficiently protected from water and cleaning products used to clean the engine bay of a vehicle.

The implementation as described of the power electronics assembly 190 as described above produces a design implementation that does not need a separate installation location, separate connections and sealing requirements and thereby avoids increasing in the number of failure modes. Further, the implementation of the power electronics assembly 190 distributes the power electronics assemblies around the machine enables the power electronics assembly 190 to stay closer to the outline of the machine and, essentially, reducing its size such that it is kept within the overall confines of circumferential footprint and space allocation of the electrical turbomachine.

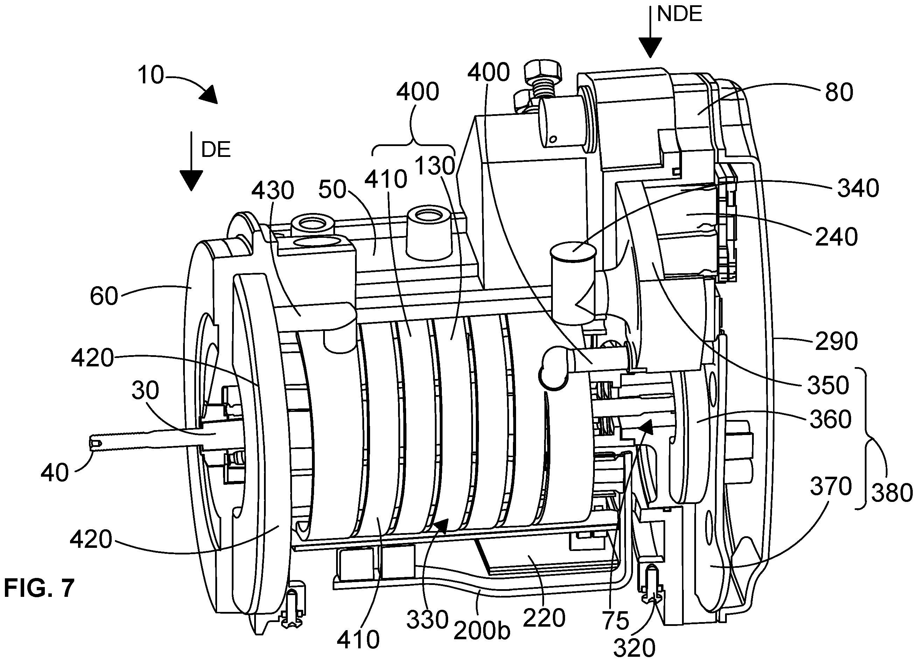

Referring to Figure 7, the cooling system 330 of the electric compressor 10 in accordance with the present invention is depicted. Figure 7 depicts a cross-section where half of the electric compressor 10 has been removed. In the half that has been "cut-away" in Figure 7, the cooling system 330 has been left to illustrate cooling system 330.

A single cooling system 330 is used to cool all of the components of the electric compressor 10. The cooling system 330 comprises a continuous cooling circuit around the interior of housing 50 of the electric compressor 10. The cooling system 330 is design for a coolant fluid, such as water, glycol or another suitable coolant, to be pumped, by a pump (not shown), around the interior of the electric compressor 10. The cooling system 330 comprises a plurality of individual cooling cavities, as described herein, connected directly or by a number of cooling conduits to form a complete cooling system 330 for the entire electric compressor 10. Each of the cooling cavities is surrounded by a thermally conductive material to assist in the transfer of heat form the electric compressor 10 to the coolant fluid. In this embodiment, aluminium is preferred due to its excellent the thermally conductivity, immunity to rust, resistance to corrosion and strong mechanical properties.

The coolant fluid enters the cooling system 330 at the coolant inlet 340 which is located on the side wall 55 of the housing 50 and proximate the NDE wall 80 and NDE of the electric compressor 10. The positioning of the coolant inlet 340 is flexible but it is preferred from it to be closer to the NDE of the electric compressor.

From the coolant inlet 340, the coolant fluid can flow through to a capacitor coolant cavity 350. The capacitor coolant cavity 350 is formed between the flanges 56 of the housing 50 and the NDE wall 80, and extends substantially along the end of the capacitors 240 removed from the control PCB 230.

From the capacitor coolant cavity 350 the coolant can flow into the NDE coolant cavity 360. The NDE coolant cavity 360 is a torus-shaped, or toroid-shaped, cavity in the NDE wall 80 that encircles the sensor portion 75 of the central cavity 70. It is important to keep the permanent magnet 280 for the sensor 260 cool, such that the magnetism of the permanent magnet 280 is not degaussed. The NDE coolant cavity 360 not only cools the sensor cavity 75 but also cools the interior and exterior sides of the NDE wall 80. The NDE coolant cavity 360 aids in cooling both the central cavity 70 and the components housed therein, including the sensor portion 75 of the cavity, but also the control board 230 mounted on the exterior surface of the NDE wall 80. The NDE coolant cavity 360 therefore performs triple-sided cooling.

Furthermore, the NDE coolant cavity 360 is thermally linked with the bearing housing 87 such that it can removed heat conducted along the shaft which heats the NDE bearing 85 and self-heating of the NDE bearing 85. These heat flows act to increase the operating temperature of this bearing 85, which would lead to a markedly reduced life if it were not cooled by the NDE coolant cavity 360.

The NDE coolant cavity 360 does not extend the full height or width of the NDE wall 80 or control board 230. A control PCB coolant cavity 370 is provided to cool the part of the control PCB 230 not sufficiently cooled by the capacitor coolant cavity 350 or the NDE coolant cavity 360. The control PCB coolant cavity 370 is substantially plate-like or disc-like and is a cavity within the NDE wall 80 and is supplied with coolant fluid from the NDE coolant cavity 360.

The capacitor coolant cavity 350, the NDE coolant cavity 360 and the control PCB cooling cavity 370 are the NDE wall coolant portion 380 of the cooling system 330 and each of the cavities is fluidly connected to allow coolant fluid to circulate throughout them via a continuous pathway or circuit.

The NDE wall coolant portion 380 is fluidly connected to the central coolant portion 390 by a first cooling conduit 400. The first cooling conduit 400 supplies coolant fluid to the central coolant portion 390 and a helix coolant cavity 410. The helix coolant cavity 410 is a continuous helix that wraps around the electrical machine 90 from the NDE wall 80 towards the DE wall 60. The helix coolant cavity 410 is formed from the coolant channels 130 in the jacket 120 engaging with the side wall 55 of the housing 50. That is, the jacket 120 comprises a helical coolant channel 130 in its exterior surface that is sealed by engaging the side wall 55. The majority of the exterior surface of the jacket 120 is the coolant channel 130. The cross-section of a portion of the helix coolant cavity 410 is generally rectangular. The longer edges of the rectangular cross-section are parallel to the rotational axis R. In this embodiment, the helix of the coolant channel 130, and the helix coolant cavity 410, has seven turns. The number of turns and the helical geometry of the helix coolant cavity 410 can be modified according to the requirements of the cooling system 330. For example, the number of turns could be increased to increase heat transfer to the coolant with the drawback of the higher inlet pressure due to increased pressure drop across the fluid. In this embodiment, seven turns was found by the applicant to be a comprise which provided adequate cooling while simultaneously not increasing the pressure beyond that of the rating of the pump typically used in the desired application. This is because the coolant fluid in this embodiment will be provided by the pump of the internal combustion engine's coolant system. Other embodiments are envisaged in that the coolant cavity 410 is not a helix but rather interconnected parallel channels.

Coolant fluid entering the helix coolant cavity 410 will circle the electrical machine 90 seven times before exiting the helix coolant cavity 410 and entering the DE cooling portion 420 by a second conduit 430. The helix coolant cavity 410 has a doublesided cooling activity as it cools both the electrical machine 90 (i.e. central cavity 70, rotor 90, stator 110 and windings 150) and the power PCBs 180a, 180b, 180c via cooling the jacket 120 and side wall 55, respectively.

The turn of the helix coolant cavity 410 proximate the DE wall 60 is fluidly connected by a second cooling conduit 430 to the DE coolant cavity 440. The DE coolant cavity 430 is a torus-shaped, or toroid-shaped, cavity within the DE wall 60 that encircles the DE bearing 65 and the location on the DE wall 60 which the shaft 30 protrudes through the DE wall 60 to connect to the compressor 20. The DE coolant cavity 430 is substantially larger in volume than the similarly shaped NDE coolant cavity 360, reflecting the fact that, in use, the DE of the electric compressor 10 will be substantially hotter than the NDE of the electric compressor 10 in use. This is because of the DE proximity to the hot fluids (i.e. compressed engine intake air) onto which the turbo compressor 25 and compressor 20 have performed work. The DE coolant cavity 440 performs triple sided cooling of the central cavity 70 and DE bearing 65. Integrating the DE bearing 65 within the DE wall 60 enables the DE bearing 65 to be cooled by the DE coolant cavity 440. Heat from the compressor 25 is conducted into the electric compressor 10 through the housing 55 and heats the DE bearing 65 and the DE bearing 65 self-generates heat internally. These heat flows act to increase the operating temperature of the DE bearing 65, which would lead to a markedly reduced lifespan if not cooled. This problem is addressed by the DE coolant cavity 430that not only cools heat from the compressor 20 but also the self-generated heat from the DE bearing 65.

The coolant fluid leaves the DE coolant cavity 440 via an outlet 450. In use, the outlet 450 is connected by piping to a radiator such that the coolant fluid can be cooled before circulating back into the cooling system 330 via the inlet 340. The cooling system 330 flows from the NDE cooling portion 380 to helix coolant cavity 410 to DE coolant cavity 440 the DE end of the electric compressor 10 is hotter than the NDE. By pumping the coolant fluid in this direction, i.e. along increasing temperature gradient, the cooling system 330 ensures that each part of the electric compressor 10 is sufficiently cooled.

In the prior art, the control PCB 230 and the power PCBs 180a, 180b, 180c are typically cooled by one or more cooling systems and the electrical machine 90 by another cooling system. This significantly increases the size of the electric compressor 10. The electric compressor 10 and cooling system 330 of the present invention has the advantage of being more compact and have less components as a single cooling system 330 or cooling circuit can cool every part of the electric turbomachine 10. This is particular advantageous in vehicle applications as it reduces the size of the electric compressor 10 such that is occupies less space in the engine bay while also reducing the mass of the overall system.

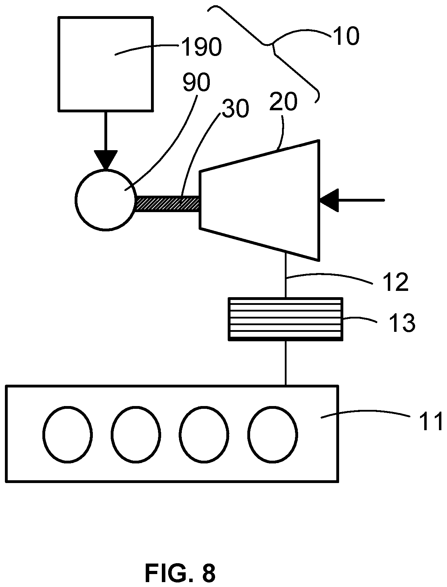

Referring to Figure 8 of the drawings, there is shown a schematic diagram showing how an electric compressor 10 could be connected in relation to an internal combustion engine 11. The electric compressor 10 is in accordance with the present invention and comprises power electronics 190 that supplies a current to a high-speed electrical machine 90. The high-speed electrical machine 90 is arranged to convert the electric current suppled to it by the power electronics 190 to rotation of the shaft 30 and the compressor 20 connected by the end of the shaft 30. Rotation of the compressor 20 by the high-speed electrical machine 90 draws in air and compresses the air, boosting the pressure of the air. Typically, the electric compressor 10 is located downstream of pressure boosting system, such as a turbocharger, and the electric compressor 10 further boosts the pressure of the air from the turbocharger. This is particularly useful for providing a rapid increase in boost pressure during the start-up or warm-up of a system or during transient or high-load events. Alternatively, the electric compressor 10 can draw and boost the pressure of air drawn directly form the environment. The pressure-boosted air leaves the compressor 20 by the inlet conduit 12 and travels towards the internal combustion engine 11. Along the pathway of the inlet conduit 12 is located a radiator 13 which is arranged to cool the pressure-boosted air in the inlet conduit 12, prior to the pressure-boosted air entering the internal combustion engine 11. The amount of boost pressure generated by the electric compressor 10 in the pressure-boosted air is controlled by the speed of rotation of the high-speed electrical machine 90, whereby the rotational speed of the high-speed electrical machine 90 is controlled from inputs from the power electronics 190. The power electronics 190 can control the boost pressure in response to a number of sensors or readings, for example, this will typically be a request from the engine control unit that will request a set speed. However, other parameters could be measured such as the power, emissions or efficiency of the internal combustion engine 11 and the power electronics assembly 190 could respond accordingly.

The above description refers exclusively to an electric compressor 10. Other embodiments, including other electric turbomachines are envisaged. For example, a turbocharger or turbogenerator where the power electronics are similarly mounted directly onto the housing of the turbocharger or turbogenerator to reduce the footprint and packaging size. Additionally, an electric turbomachine comprising a single cooling system integrated into the housing of the turbocharger or turbogenerator to provide cooling for its electrical machine and its power electronics assembly is within the scope of the present invention.

## Claims

1. An electric turbomachine (10) for use with an internal combustion engine, a turbocharger or a fuel cell e-compressor, said electric turbomachine (10) comprising:
a compressor (20) that is arranged to compress fluid within a turbo compressor (25) when it is rotationally driven about a rotational axis (R) by a shaft (30), said shaft (30) being rotational supported by a drive-end bearing (65) and a non-drive-end bearing (85), and
a high-speed electrical machine located within a housing (50) that is arranged to rotationally drive the shaft (30) about the rotational axis (R);
said housing (50) comprising a drive-end wall (60) that the shafts (30) extends through to rotationally drive the compressor (20), a non-drive-end wall (80) at the opposing end of the electric turbomachine (10) to the compressor (20), and a side wall (55) that extends between the drive-end wall (60) and the non-drive-end wall (80), and
wherein the electric turbomachine (10) comprises a cooling system (330), for receiving a flow of a coolant fluid to cool the electric turbomachine (10), that is integrated within the housing (50) of the electric turbomachine (10),
wherein the cooling system (330) comprises a side wall coolant cavity located within the side wall (55) for receiving a flow of coolant fluid to cool the electric turbomachine (10),
**characterised in that** the side wall coolant cavity is arranged to cool the electrical machine and power electronics that are mounted on an exterior surface of the side wall (55).

2. The electric turbomachine (10) of Claim 1, wherein the cooling system (330) comprises a drive-end coolant cavity located within the drive-end wall (60) for receiving a flow of coolant fluid to cool the electric turbomachine (10),
and wherein the drive-end coolant cavity encircles the shaft (30) as it extends through the drive-end wall (60).

3. The electric turbomachine (10) of Claim 2, wherein the drive-end coolant cavity is arranged to cool the drive-end bearing (65),
and wherein the drive-end coolant cavity encircles the drive-end bearing (65).

4. The electric turbomachine (10) of any one preceding claim, wherein the cooling system (330) comprises a non-drive-end coolant cavity located within the non-drive-end wall (80) for receiving a flow of fluid coolant to cool the electric turbomachine (10),
and wherein the non-drive-end coolant cavity encircles the non-drive end of the shaft (30).

5. The electric turbomachine (10) of Claim 4, wherein non-drive-end coolant cavity encircles the non-drive end bearing (85).

6. The electric turbomachine (10) of any one of Claims 4 to 5, wherein the non-drive-end coolant cavity is arranged to cool power electronics that are mounted on an exterior surface of the non-drive-end wall (80),
and wherein non-drive-end coolant cavity comprises one or more plate-like or disc-like portions that are arranged to cool the power electronics mounted on the exterior surface of the non-drive-end wall (80).

7. The electric turbomachine (10) of Claim 6, wherein the non-drive-end coolant cavity is arranged to cool a control printed circuit board that is mounted on the exterior surface of the non-drive-end wall (80).

8. The electric turbomachine (10) of any one of Claims 6 to 7, wherein the non-drive-end coolant cavity is arranged to cool capacitors (240).

9. The electric turbomachine (10) of any one preceding claim, wherein the side wall coolant cavity is arranged to cool a power printed circuit board that is mounted on the exterior surface of the side wall (55).

10. The electric turbomachine (10) of Claim 9, wherein the side wall coolant cavity is arranged to cool a plurality of power PCBs (180a, 180b, 180c) that are mounted on one or more exterior surfaces of the side wall (55).

11. The electric turbomachine (10) of any one of Claims 1 to 10, wherein the majority of the side wall coolant cavity is formed between an interior surface of the side wall (55) and one or more channels in the surface of a jacket (120) that supports the electrical machine.

12. The electric turbomachine (10) of any one of Claim 1 to 10, wherein the majority of the side wall coolant cavity is formed within the side wall (55) of the housing (50).

13. The electric turbomachine (10) of Claim 1, wherein the cooling system (330) comprises the drive-end coolant cavity of any one of Claims 2 to 3, the non-drive-end cavity of any one preceding claim and the side wall coolant cavity of any one preceding claim.

14. The electric turbomachine (10) of Claim 13, wherein the drive-end coolant cavity, the non-drive-end coolant cavity and the side wall coolant cavity are fluidly connected to one another to form a continuous pathway inside the housing (50) for receiving a flow of coolant fluid to cool the electric turbomachine (10),
and wherein the fluid connections between the drive-end coolant cavity, non-drive-end coolant cavity and the side wall coolant cavity are integrated within the drive-end wall (60), non-drive-end wall (80) and the side wall (55),
and wherein the drive-end coolant cavity is fluidly connected to the side wall coolant cavity, and the side wall coolant cavity is fluidly connected to the non-drive-end coolant cavity, and wherein the cooling system (330) is arranged such that, in use, coolant fluid flows into the cooling system (330) via an inlet into the non-drive-end wall cavity and coolant fluid flows out of the cooling system (330) via an outlet from the drive-end wall cavity.

15. The electric turbomachine (10) of any one of Claims 1 to 14, wherein the cooling system (330) is the only system used to actively cool the electric turbomachine (10).

## Patentansprüche

1. Eine elektrische Turbomaschine (10) zur Verwendung mit einem Verbrennungsmotor, einem Turbolader oder einem elektrischen Brennstoffzellenkompressor, wobei die elektrische Turbomaschine (10) Folgendes beinhaltet:
einen Kompressor (20), der dazu eingerichtet ist, Fluid innerhalb eines Turbokompressors (25) zu komprimieren, wenn er durch eine Welle (30) um eine Drehachse (R) drehangetrieben wird, wobei die Welle (30) durch ein antriebsseitiges Lager (65) und ein nichtantriebsseitiges Lager (85) drehbar gelagert ist, und
eine elektrische Hochgeschwindigkeitsmaschine, die innerhalb eines Gehäuses (50) untergebracht ist und dazu eingerichtet ist, die Welle (30) um die Drehachse (R) drehanzutreiben;
wobei das Gehäuse (50) eine antriebsseitige Wand (60), durch die sich die Welle (30) erstreckt, um den Kompressor (20) drehanzutreiben, eine nichtantriebsseitige Wand (80) an der zu dem Kompressor (20) entgegengesetzten Seite der elektrischen Turbomaschine (10) und eine Seitenwand (55), die sich zwischen der antriebsseitigen Wand (60) und der nichtantriebsseitigen Wand (80) erstreckt, beinhaltet und
wobei die elektrische Turbomaschine (10) ein Kühlsystem (330) zur Aufnahme eines Stroms eines Kühlmittelfluids zur Kühlung der elektrischen Turbomaschine (10) beinhaltet, das innerhalb des Gehäuses (50) der elektrischen Turbomaschine (10) integriert ist,
wobei das Kühlsystem (330) zur Aufnahme eines Stroms eines Kühlmittelfluids zur Kühlung der elektrischen Turbomaschine (10) einen Seitenwand-Kühlmittelhohlraum beinhaltet, der innerhalb der Seitenwand (55) untergebracht ist,
**dadurch gekennzeichnet, dass** der Seitenwand-Kühlmittelhohlraum dazu eingerichtet ist, die elektrische Maschine und Leistungselektronik, die an einer Außenoberfläche der Seitenwand (55) angebracht ist, zu kühlen.

2. Elektrische Turbomaschine (10) gemäß Anspruch 1, wobei das Kühlsystem (330) zur Aufnahme eines Stroms eines Kühlmittelfluids zur Kühlung der elektrischen Turbomaschine (10) einen antriebsseitigen Kühlmittelhohlraum beinhaltet, der innerhalb der antriebsseitigen Wand (60) untergebracht ist,
und wobei der antriebsseitige Kühlmittelhohlraum die Welle (30), die sich durch die antriebsseitige Wand (60) erstreckt, umgibt.

3. Elektrische Turbomaschine (10) gemäß Anspruch 2, wobei der antriebsseitige Kühlmittelhohlraum dazu eingerichtet ist, das antriebsseitige Lager (65) zu kühlen, und wobei der antriebsseitige Kühlmittelhohlraum das antriebsseitige Lager (65) umgibt.

4. Elektrische Turbomaschine (10) gemäß einem der vorhergehenden Ansprüche, wobei das Kühlsystem (330) zur Aufnahme eines Stroms eines Fluidkühlmittels zur Kühlung der elektrischen Turbomaschine (10) einen nichtantriebsseitigen Kühlmittelhohlraum beinhaltet, der innerhalb der nichtantriebsseitigen Wand (80) untergebracht ist,
und wobei der nichtantriebsseitige Kühlmittelhohlraum die Nichtantriebsseite der Welle (30) umgibt.

5. Elektrische Turbomaschine (10) gemäß Anspruch 4, wobei der nichtantriebsseitige Kühlmittelhohlraum das nichtantriebsseitige Lager (85) umgibt.

6. Elektrische Turbomaschine (10) gemäß einem der Ansprüche 4 bis 5, wobei der nichtantriebsseitige Kühlmittelhohlraum dazu eingerichtet ist, Leistungselektronik zu kühlen, die an einer Außenoberfläche der nichtantriebsseitigen Wand (80) angebracht ist,
und wobei der nichtantriebsseitige Kühlmittelhohlraum einen oder mehrere plattenartige oder scheibenartige Abschnitte beinhaltet, die dazu eingerichtet sind, die Leistungselektronik, die an der Außenoberfläche der nichtantriebsseitigen Wand (80) angebracht ist, zu kühlen.

7. Elektrische Turbomaschine (10) gemäß Anspruch 6, wobei der nichtantriebsseitige Kühlmittelhohlraum dazu eingerichtet ist, eine Steuerplatine zu kühlen, die an der Außenoberfläche der nichtantriebsseitigen Wand (80) angebracht ist.

8. Elektrische Turbomaschine (10) gemäß einem der Ansprüche 6 bis 7, wobei der nichtantriebsseitige Kühlmittelhohlraum dazu eingerichtet ist, Kondensatoren (240) zu kühlen.

9. Elektrische Turbomaschine (10) gemäß einem der vorhergehenden Ansprüche, wobei der Seitenwand-Kühlmittelhohlraum dazu eingerichtet ist, eine Leistungsplatine zu kühlen, die an der Außenoberfläche der Seitenwand (55) angebracht ist.

10. Elektrische Turbomaschine (10) gemäß Anspruch 9, wobei der Seitenwand-Kühlmittelhohlraum dazu eingerichtet ist, eine Vielzahl von Leistungsplatinen (180a, 180b, 180c) zu kühlen, die an einer oder mehreren Außenoberflächen der Seitenwand (55) angebracht sind.

11. Elektrische Turbomaschine (10) gemäß einem der Ansprüche 1 bis 10, wobei der Großteil des Seitenwand-Kühlmittelhohlraums zwischen einer Innenoberfläche der Seitenwand (55) und einem oder mehreren Kanälen in der Oberfläche eines Mantels (120), der die elektrische Maschine trägt, gebildet ist.

12. Elektrische Turbomaschine (10) gemäß einem der Ansprüche 1 bis 10, wobei der Großteil des Seitenwand-Kühlmittelhohlraums innerhalb der Seitenwand (55) des Gehäuses (50) gebildet ist.

13. Elektrische Turbomaschine (10) gemäß Anspruch 1, wobei das Kühlsystem (330) den antriebsseitigen Kühlmittelhohlraum gemäß einem der Ansprüche 2 bis 3, den nichtantriebsseitigen Hohlraum gemäß einem der vorhergehenden Ansprüche und den Seitenwand-Kühlmittelhohlraum gemäß einem der vorhergehenden Ansprüche beinhaltet.

14. Elektrische Turbomaschine (10) gemäß Anspruch 13, wobei der antriebsseitige Kühlmittelhohlraum, der nichtantriebsseitige Kühlmittelhohlraum und der Seitenwand-Kühlmittelhohlraum fluidisch miteinander verbunden sind, um innerhalb des Gehäuses (50) einen kontinuierlichen Pfad zur Aufnahme eines Stroms eines Kühlmittelfluids zur Kühlung der elektrischen Turbomaschine (10) zu bilden,
und wobei die Fluidverbindungen zwischen dem antriebsseitigen Kühlmittelhohlraum, dem nichtantriebsseitigen Kühlmittelhohlraum und dem Seitenwand-Kühlmittelhohlraum innerhalb der antriebsseitigen Wand (60), der nichtantriebsseitigen Wand (80) und der Seitenwand (55) integriert sind
und wobei der antriebsseitige Kühlmittelhohlraum mit dem Seitenwand-Kühlmittelhohlraum fluidisch verbunden ist und der Seitenwand-Kühlmittelhohlraum mit dem nichtantriebsseitigen Kühlmittelhohlraum fluidisch verbunden ist und wobei das Kühlsystem (330) derart eingerichtet ist, dass bei Verwendung Kühlmittelfluid via einen Einlass in den nichtantriebsseitigen Wandhohlraum in das Kühlsystem (330) hinein strömt und Kühlmittelfluid via einen Auslass aus dem antriebsseitigen Wandhohlraum aus dem Kühlsystem (330) heraus strömt.

15. Elektrische Turbomaschine (10) gemäß einem der Ansprüche 1 bis 14, wobei das Kühlsystem (330) das einzige System ist, das zur aktiven Kühlung der elektrischen Turbomaschine (10) verwendet wird.

## Revendications

1. Une turbomachine électrique (10) destinée à être utilisée avec un moteur à combustion interne, un turbocompresseur de suralimentation ou un e-compresseur pour pile à combustible, ladite turbomachine électrique (10) comprenant :
un compresseur (20) qui est agencé afin de comprimer du fluide à l'intérieur d'un turbocompresseur (25) lorsqu'il est entraîné en rotation autour d'un axe de rotation (R) par un arbre (30), ledit arbre (30) étant supporté en rotation par un palier côté entraînement (65) et un palier côté opposé à l'entraînement (85), et
une machine électrique à grande vitesse placée à l'intérieur d'un boîtier (50) qui est agencée afin d'entraîner l'arbre (30) en rotation autour de l'axe de rotation (R) ;
ledit boîtier (50) comprenant une paroi côté entraînement (60) à travers laquelle l'arbre (30) s'étend afin d'entraîner le compresseur (20) en rotation, une paroi côté opposé à l'entraînement (80) au niveau de l'extrémité de la turbomachine électrique (10) opposée au compresseur (20), et une paroi latérale (55) qui s'étend entre la paroi côté entraînement (60) et la paroi côté opposé à l'entraînement (80), et
où la turbomachine électrique (10) comprend un système de refroidissement (330), destiné à recevoir un flux d'un fluide de refroidissement afin de refroidir la turbomachine électrique (10), qui est intégré à l'intérieur du boîtier (50) de la turbomachine électrique (10),
où le système de refroidissement (330) comprend une cavité pour agent de refroidissement de paroi latérale placée à l'intérieur de la paroi latérale (55) destinée à recevoir un flux de fluide de refroidissement afin de refroidir la turbomachine électrique (10),
**caractérisée en ce que** la cavité pour agent de refroidissement de paroi latérale est agencée afin de refroidir la machine électrique et des dispositifs électroniques de puissance qui sont montés sur une surface extérieure de la paroi latérale (55).

2. La turbomachine électrique (10) de la revendication 1, où le système de refroidissement (330) comprend une cavité pour agent de refroidissement côté entraînement placée à l'intérieur de la paroi côté entraînement (60) destinée à recevoir un flux de fluide de refroidissement afin de refroidir la turbomachine électrique (10),
et où la cavité pour agent de refroidissement côté entraînement encercle l'arbre (30) alors qu'il s'étend à travers la paroi côté entraînement (60).

3. La turbomachine électrique (10) de la revendication 2, où la cavité pour agent de refroidissement côté entraînement est agencée afin de refroidir le palier côté entraînement (65),
et où la cavité pour agent de refroidissement côté entraînement encercle le palier côté entraînement (65).

4. La turbomachine électrique (10) d'une quelconque revendication précédente, où le système de refroidissement (330) comprend une cavité pour agent de refroidissement côté opposé à l'entraînement placée à l'intérieur de la paroi côté opposé à l'entraînement (80) destinée à recevoir un flux d'agent de refroidissement fluide afin de refroidir la turbomachine électrique (10),
et où la cavité pour agent de refroidissement côté opposé à l'entraînement encercle le côté opposé à l'entraînement de l'arbre (30).

5. La turbomachine électrique (10) de la revendication 4, où la cavité pour agent de refroidissement côté opposé à l'entraînement encercle le palier côté opposé à l'entraînement (85).

6. La turbomachine électrique (10) de l'une quelconque des revendications 4 à 5, où la cavité pour agent de refroidissement côté opposé à l'entraînement est agencée afin de refroidir des dispositifs électroniques de puissance qui sont montés sur une surface extérieure de la paroi côté opposé à l'entraînement (80),
et où la cavité pour agent de refroidissement côté opposé à l'entraînement comprend une ou plusieurs portions semblables à une plaque ou à un disque qui sont agencées afin de refroidir les dispositifs électroniques de puissance montés sur la surface extérieure de la paroi côté opposé à l'entraînement (80).

7. La turbomachine électrique (10) de la revendication 6, où la cavité pour agent de refroidissement côté opposé à l'entraînement est agencée afin de refroidir une carte de circuit imprimé (PCB, *Printed Circuit Board*) de commande qui est montée sur la surface extérieure de la paroi côté opposé à l'entraînement (80).

8. La turbomachine électrique (10) de l'une quelconque des revendications 6 à 7, où la cavité pour agent de refroidissement côté opposé à l'entraînement est agencée afin de refroidir des condensateurs (240).

9. La turbomachine électrique (10) d'une quelconque revendication précédente, où la cavité pour agent de refroidissement de paroi latérale est agencée afin de refroidir une carte de circuit imprimé de puissance qui est montée sur la surface extérieure de la paroi latérale (55).

10. La turbomachine électrique (10) de la revendication 9, où la cavité pour agent de refroidissement de paroi latérale est agencée afin de refroidir une pluralité de PCB de puissance (180a, 180b, 180c) qui sont montées sur une ou plusieurs surfaces extérieures de la paroi latérale (55).

11. La turbomachine électrique (10) de l'une quelconque des revendications 1 à 10, où la majeure partie de la cavité pour agent de refroidissement de paroi latérale est formée entre une surface intérieure de la paroi latérale (55) et un ou plusieurs canaux dans la surface d'une chemise (120) qui supporte la machine électrique.

12. La turbomachine électrique (10) de l'une quelconque des revendications 1 à 10, où la majeure partie de la cavité pour agent de refroidissement de paroi latérale est formée à l'intérieur de la paroi latérale (55) du boîtier (50).

13. La turbomachine électrique (10) de la revendication 1, où le système de refroidissement (330) comprend la cavité pour agent de refroidissement côté entraînement de l'une quelconque des revendications 2 à 3, la cavité côté opposé à l'entraînement d'une quelconque revendication précédente et la cavité pour agent de refroidissement de paroi latérale d'une quelconque revendication précédente.

14. La turbomachine électrique (10) de la revendication 13, où la cavité pour agent de refroidissement côté entraînement, la cavité pour agent de refroidissement côté opposé à l'entraînement et la cavité pour agent de refroidissement de paroi latérale sont raccordées fluidiquement l'une à l'autre afin de former une voie de passage continue au sein du boîtier (50) destinée à recevoir un flux de fluide de refroidissement afin de refroidir la turbomachine électrique (10),
et où les raccordements fluidiques entre la cavité pour agent de refroidissement côté entraînement, la cavité pour agent de refroidissement côté opposé à l'entraînement et la cavité pour agent de refroidissement de paroi latérale sont intégrés à l'intérieur de la paroi côté entraînement (60), de la paroi côté opposé à l'entraînement (80) et de la paroi latérale (55),
et où la cavité pour agent de refroidissement côté entraînement est raccordée fluidiquement à la cavité pour agent de refroidissement de paroi latérale, et la cavité pour agent de refroidissement de paroi latérale est raccordée fluidiquement à la cavité pour agent de refroidissement côté opposé à l'entraînement, et où le système de refroidissement (330) est agencé de telle sorte que, en utilisation, du fluide de refroidissement s'écoule dans le système de refroidissement (330) via un orifice d'entrée ouvrant dans la cavité de paroi côté opposé à l'entraînement et que du fluide de refroidissement s'écoule hors du système de refroidissement (330) via un orifice de sortie partant de la cavité de paroi côté entraînement.

15. La turbomachine électrique (10) de l'une quelconque des revendications 1 à 14, où le système de refroidissement (330) est le seul système utilisé afin de refroidir activement la turbomachine électrique (10).
